(19) **Europäisches Patentamt / European Patent Office / Office européen des brevets**

(11) **EP 3 928 272 B1**

(12) **FASCICULE DE BREVET EUROPEEN**

(45) Date de publication et mention de la délivrance du brevet:
**14.01.2026 Bulletin 2026/03**

(21) Numéro de dépôt: **20704329.0**

(22) Date de dépôt: **18.02.2020**

(51) Classification Internationale des Brevets (IPC):
**G06Q 20/36** *(2012.01)* **G06Q 20/40** *(2012.01)*
**G06F 3/16** *(2006.01)* **G06F 21/32** *(2013.01)*
**G10L 17/06** *(2013.01)*

(52) Classification Coopérative des Brevets (CPC):
**G06F 21/32; G06F 3/167; G06Q 20/3674; G06Q 20/40145;** G10L 15/00

(86) Numéro de dépôt international:
**PCT/EP2020/054184**

(87) Numéro de publication internationale:
**WO 2020/169570 (27.08.2020 Gazette 2020/35)**

(54) **PROCEDE DE TRAITEMENT D'UNE TRANSACTION DE PAIEMENT, DISPOSITIF, SYSTEME ET PROGRAMMES CORRESPONDANTS**

VERFAHREN ZUR VERARBEITUNG EINER ZAHLUNGSTRANSAKTION UND ENTSPRECHENDE VORRICHTUNG, SYSTEM UND PROGRAMME

METHOD FOR PROCESSING A PAYMENT TRANSACTION, AND CORRESPONDING DEVICE, SYSTEM AND PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2019 FR 1901669**

(43) Date de publication de la demande:
**29.12.2021 Bulletin 2021/52**

(73) Titulaire: **Banks and Acquirers International Holding**
**75015 Paris (FR)**

(72) Inventeurs:
• **LEGER, Michel**
**75116 PARIS (FR)**
• **QUENTIN, Pierre**
**95880 ENGHIEN LES BAINS (FR)**
• **DUBREUIL, Arnaud**
**75016 PARIS (FR)**
• **D'AVOUT, Quitterie**
**75011 PARIS (FR)**
• **MARCON, Jérôme**
**75116 PARIS (FR)**

(74) Mandataire: **Germain Maureau**
**12, rue Boileau**
**69006 Lyon (FR)**

(56) Documents cités:
**US-A1- 2017 359 334     US-A1- 2018 068 317**
**US-B1- 10 063 542**

## Description

### 1. Domaine Technique

L'invention se rapporte à la mise en œuvre de transactions de paiement. L'invention porte plus particulièrement sur la mise en œuvre d'une transaction de paiement qui comprend l'utilisation d'une interface vocale. L'invention vise plus particulièrement à fournir un procédé de traitement de transactions de paiement simple et sécurisé, minimisant l'exposition de données d'utilisateur.

### 2. Art Antérieur

Une part croissante de foyer est équipé de dispositifs de contrôle vocal. De tels dispositifs sont également appelées enceintes connectées. Ces dispositifs de contrôle vocal embarquent de multiples fonctionnalités, parmi lesquelles, pour certains d'entre eux, la possibilité d'effectuer des commandes de biens ou de services. Par exemple, le dispositif de contrôle vocal d'Amazon™ offre la possibilité de commander des biens ou des services sur la plateforme de vente Amazon™. Cependant, cette possibilité n'est offerte qu'à travers l'installation d'une application sur le terminal de communication de l'utilisateur. Cette application doit être paramétrée avec des options de paiement et doit être utilisée pour permettre de valider les commandes qui sont effectuées vocalement. En effet, acheter des produits par la voix peut être dangereux entre de mauvaises mains, surtout lorsque des enfants ou des personnes étrangères vivent ou passent dans le logement de l'utilisateur propriétaire du dispositif de contrôle vocal. Pour éviter cela, la seule possibilité actuellement offerte consiste à conditionner la validation de commande passée vocalement en ajoutant un code de confirmation sur une application spécifique installée sur le terminal de communication qui est appairé au dispositif de contrôle vocal. On note que ce conditionnement, par saisie d'un code de confirmation sur le terminal de communication, est optionnel et non prévu par défaut. Par défaut toute commande passée à l'aide du dispositif de contrôle vocal est automatiquement validée par la voix de l'utilisateur, sans que celui-ci ne puisse intervenir sur le déroulement de la commande (particulièrement si l'utilisateur qui place la commande n'est pas l'utilisateur propriétaire du dispositif de contrôle vocal). On connait également les documents US2018068317 et US10063542

Or la méthode telle qu'exposée précédemment comprend des lacunes. En premier lieu, cette méthode nécessite que l'utilisateur interagisse avec le terminal de communication en sa possession, pour au moins deux actions différentes : le paramétrage du terminal de communication qui est appairée avec le dispositif de contrôle vocal et la validation de la transaction de paiement. Pour ce faire, l'utilisateur doit installer une application spécifique sur son terminal de communication et la paramétrer et il doit valider la transaction sur le terminal. Le fait de devoir valider la transaction sur le terminal de communication peut être une mesure plutôt cohérente d'un point de vue sécurité. En revanche, le fait de devoir installer une application spécifique sur un terminal de communication peut être rédhibitoire pour un certain nombre d'utilisateurs. Par ailleurs, dans le cadre de la méthode précédemment décrite, il n'y a pas d'authentification de l'utilisateur qui place la commande. En lieu et place de l'authentification, on se contente de l'utilisation du terminal de communication appairé pour éventuellement valider la transaction. De plus, pour ce qui est de la transaction de paiement, c'est-à-dire la validation de la commande, les mêmes couples « *login/mot de passe* » sont utilisés tant par le dispositif de contrôle vocal que par le terminal de communication. Cela est du au fait qu'une fois qu'il est paramétré, le dispositif de contrôle vocal est autonome et se connecte directement aux serveurs du fabricant de ce dispositif de contrôle vocal (ou aux serveurs du fournisseur de services vocaux) pour d'une part pouvoir interagir avec l'utilisateur et d'autre part pourvoir effectuer des recherches et des actions en fonction des commandes vocales de l'utilisateur. Ainsi, la passation d'une commande, conduisant à un achat de bien ou de services par l'intermédiaire d'un dispositif de contrôle vocal n'est pas suffisamment sécurisée.

### 3. Résumé de l'invention

L'invention ne pose pas au moins certains des problèmes de l'art antérieur. Plus particulièrement, l'invention se rapporte à un processus de traitement d'une transaction de paiement d'un bien ou d'un service commandé à l'aide d'un dispositif de contrôle vocal par un utilisateur énonçant vocalement son intention d'effectuer un achat de biens ou de services.

Plus particulièrement, l'invention se rapporte à un procédé de traitement d'une commande d'achat de bien ou de service selon la revendication 1.

*Ainsi, l'invention permet de s'assurer que l'utilisateur qui tente d'effectuer une commande par l'intermédiaire du dispositif de reconnaissance vocal est autorisé à le faire. Ainsi, on gère directement l'autorisation de passer commande auprès du dispositif de contrôle vocal, sans nécessiter de terminal de communication. On évite ainsi, en premier lieu, une recherche du terminal de communication appairé au dispositif de contrôle vocal.*

Ainsi, l'invention permet de s'assurer que le terminal de communication auquel l'autorisation de paiement est demandée est à proximité dudit dispositif électronique de traitement vocal.

Selon un mode de réalisation particulier, ledit son émit par ledit dispositif électronique de traitement vocal se situe dans la gamme des ultrasons.

Ainsi, le son transmis à destination du terminal de communication auquel le dispositif de contrôle vocal est appairé est inaudible.

Selon une caractéristique particulière, le procédé comprend en outre, postérieurement à la transmission de la requête d'obtention d'une autorisation d'achat, la réception d'une réponse d'acceptation de la transaction de paiement.

Selon un mode de réalisation particulier, le procédé de traitement d'une transaction de paiement, comprend en outre, postérieurement à la réception d'une réponse d'acceptation de la transaction de paiement, une étape de transmission d'une structure de données représentative de la transaction de paiement à un serveur transactionnel.

Selon un mode de réalisation particulier, la structure de données représentative de la transaction de paiement comprend au moins une donnée représentative d'une empreinte vocale courante.

Selon une caractéristique particulière, ladite au moins une donnée représentative d'une empreinte vocale courante est utilisée pour remplacer au moins une donnée de paiement d'une carte de paiement dudit utilisateur.

Selon un mode de réalisation particulier, ladite au moins une donnée représentative d'une empreinte vocale courante est utilisée pour construire un jeton de paiement à l'aide d'au moins une donnée de paiement d'une carte de paiement dudit utilisateur.

Selon un autre aspect, l'invention se rapporte également à un dispositif électronique de contrôle vocal selon la revendication 8.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un dispositif d'exécution selon l'invention et étant conçu pour commander l'exécution des différentes étapes des procédés, mis en œuvre au niveau du terminal de communication, du dispositif électronique d'exécution et/ou du serveur distant, dans le cadre d'une répartition des traitements à effectuer et déterminés par un codes source scripté.

En conséquence, l'invention vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

## 4. Présentation des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- [Fig 1] décrit un système dans lequel l'invention est mise en œuvre ;
- [Fig 2] illustre le traitement d'un achat effectué par une technique antérieure ;
- [Fig 3] illustre le traitement d'un achat effectué à l'ai de la technique de l'invention ;
- [Fig 4] illustre un dispositif de contrôle vocal selon l'invention.

## 5. Description des modes de réalisation

### 5.1. Principe général

Comme exposé précédemment, le principe général de l'invention consiste en la mise en œuvre d'une authentification de l'utilisateur qui effectue une passation de commande vocale, par l'intermédiaire d'un dispositif de contrôle vocal. En fonction des modes de réalisation, l'authentification de l'utilisateur est effectuée soit localement, sur le dispositif de contrôle vocal lui-même, soit à distance. Par ailleurs, l'invention ajoute également une opération de validation, mise en œuvre de manière automatique par le terminal de communication auquel le dispositif de contrôle vocal est appairé. En fonction des modes de réalisation, l'authentification de l'utilisateur et l'opération de validation par le terminal de communication sont mises en œuvre conjointement ou concomitamment, comme cela est décrit par la suite.

Ainsi, en premier lieu, le principe général de l'invention repose sur l'authentification de l'utilisateur qui passe la commande. Plus particulièrement, lors de la passation de la commande, la voix de l'utilisateur est authentifiée, par comparaisons d'une empreinte vocale courante avec une empreinte vocale de référence. Cette comparaison, est de manière préférentielle, mise en œuvre lors de la prononciation, par l'utilisateur, des mots clés nécessaires à l'activation du dispositif de contrôle vocal.

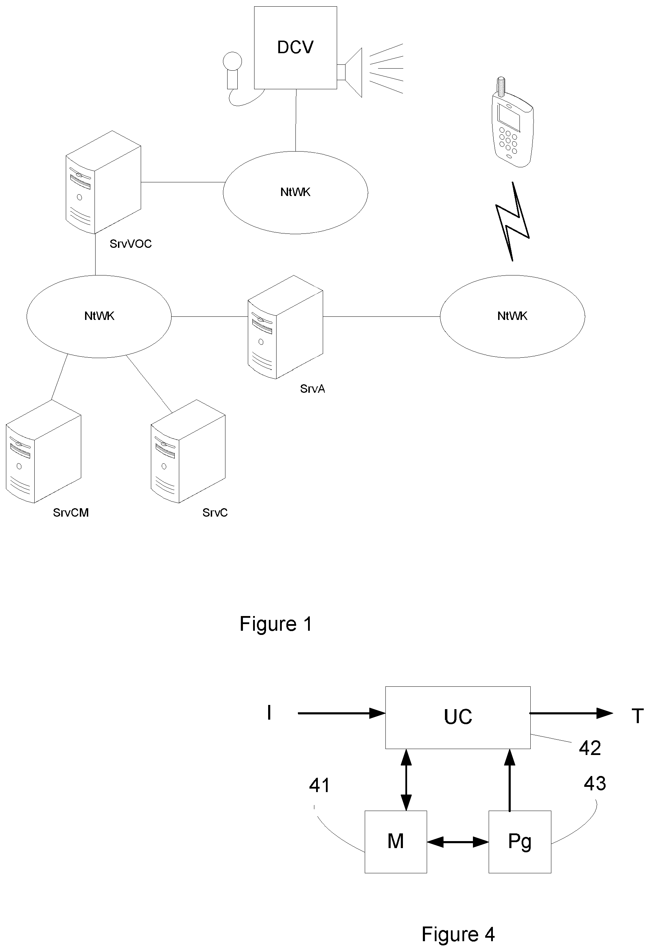

La **figure 1** décrit un système dans lequel la technique décrite est mise en œuvre. Un tel système comprend un dispositif de contrôle vocal DCV (qui comprend une unité de traitement comprenant un processeur, de la mémoire, des modules de réception et de transmission de données, tels que des modules de communication réseaux (filaires et/ou sans fils de type ethernet, wifi, bluetooth), au moins un composant de captation de commandes vocales (microphone), dit composant de captation, et un composant d'émission sonore (haut-parleur), dit composant d'émission. Le dispositif de contrôle vocal est connecté, par l'intermédiaire d'un réseau de communication NtWK (en utilisant le ou les modules de communication réseaux), à un serveur rendant des services vocaux SrvVoc. Un tel serveur peut concrètement se présenter sous la forme d'un serveur physique et/ou d'un ensemble de serveurs répartis dans une infrastructure de traitement décentralisée de type « cloud ». Le serveur SrvVoc est lui-même connecté, en utilisant le même réseau de communication NtWK (ou un autre réseau de communication) à un ou plusieurs serveurs SrvC offrant des fonctions complémentaires (par exemple serveur marchand SrvCM, serveur d'authentification SrvCA, serveur transactionnel (et/ou bancaire) SrvT, etc.). Un terminal de communication TCom, per exemple un smartphone est également connecté à un réseau de communication NtWK (pouvant être identique ou différent des précédents) et au serveur d'authentification du dispositif de contrôle vocal (lorsque celui-ci utilise de tels services d'authentification) ou bien à un autre serveur communicant avec le serveur d'authentification SrvCA.

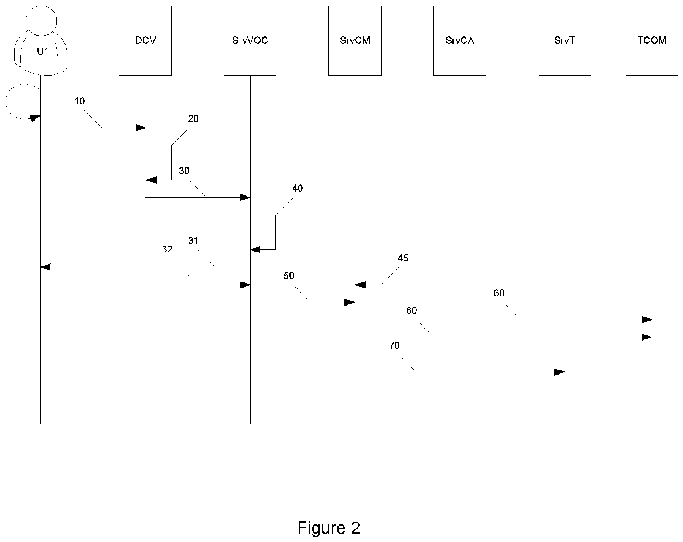

La **figure 2** illustre un exemple typique d'interaction entre le dispositif de contrôle vocal DCV de l'art antérieur et les autres composants du système de la figure 1 dans la cadre de la mise en œuvre d'une commande d'achats de biens ou de services. Le sens des flèches est important dans le cadre de cette description de l'art antérieur. Un utilisateur U1, après avoir utilisé un mot d'activation, commande (10) vocalement l'achat d'un article en prononçant une ou plusieurs phrases captées par le micro du dispositif de contrôle vocal DCV. Le Dispositif de contrôle vocal DCV enregistre (20) la commande prononcée après le mot d'activation. La commande est transmise (30) sur le(s) serveur(s) distant(s) SrvVoc du fournisseur de services vocaux pour analyse. La commande vocale est analysée et interprétée (40). Si nécessaire, une série de questions/réponses est mise en œuvre (31, 32) entre le dispositif de contrôle vocal DCV et le serveur SrvVoc pour préciser les choix de l'utilisateur. Lorsque le choix de l'utilisateur est arrêté, le serveur SrvVoc commande (50), à un serveur marchand SrvCM la mise en œuvre de la commande d'achat de bien ou de service, en utilisant éventuellement des matériels d'authentification (login/mot de passe) et de paiement (identifiant bancaires ; numéros de carte) obtenus (45) du serveur d'authentification SrvCA, pour un compte utilisateur associé au dispositif de contrôle vocal DCV. Eventuellement, si un service de validation de transaction est activé (optionnel), le serveur marchand SrvCM et/ou le serveur d'authentification SrvCA transmet (60) au terminal de communication de l'utilisateur TCOM dont le compte est associé au dispositif de contrôle vocal DCV, une requête d'obtention d'un code d'autorisation de transaction. Sur validation de la commande par l'utilisateur (ou directement si aucun contrôle n'est effectué), le serveur marchand SrvCM met en œuvre (70) la transaction de paiement correspondant à la commande de biens ou de services en coordination avec le serveur transactionnel SrvT et le serveur SrvVoc confirme la validation de la commande au dispositif de contrôle vocal DCV. Comme explicité précédemment, on constate donc que le traitement de la commande d'achat réalisée par l'utilisateur est essentiellement mené au niveau des serveurs du fournisseurs de services vocaux et potentiellement non bloqué par l'utilisateur.

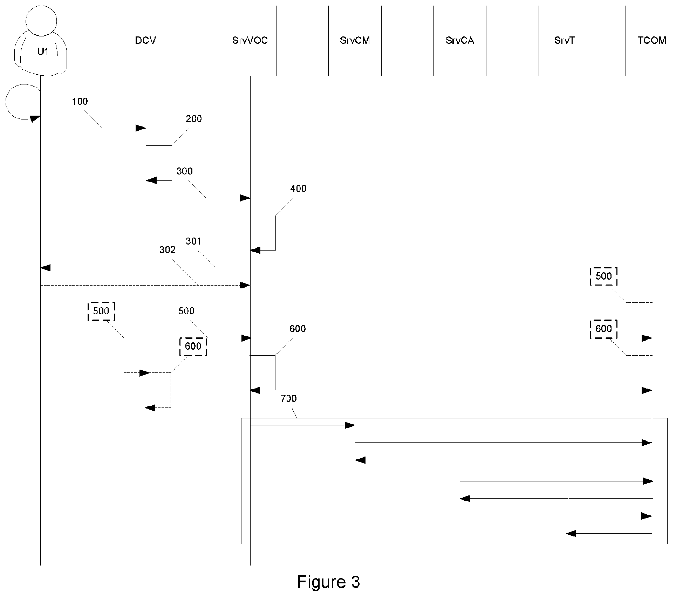

La **figure 3** illustre l'interaction entre le dispositif de contrôle vocal DCV selon l'invention et les autres composants du système de la figure 1 dans la cadre de la mise en œuvre d'une commande d'achats de biens ou de services également selon l'invention. Le sens des flèches est important dans le cadre de cette description de l'invention.

- Un utilisateur U1, après avoir utilisé un mot d'activation, commande (100) vocalement l'achat d'un article en prononçant une ou plusieurs phrases captées, par le micro du dispositif de contrôle vocal DCV ;
- Le dispositif de contrôle vocal DCV enregistre (200), au sein d'une mémoire, la commande prononcée après le mot d'activation ;
- La commande est transmise (300) sur le(s) serveur(s) distant(s) SrvVoc du fournisseur de services vocaux pour analyse, par l'intermédiaire d'un protocole de transmission de données adapté, tel que HTTP/2 ;
- La commande vocale est reçue, analysée et interprétée (400). Si nécessaire, une série de questions/réponses (301, 302) est mise en œuvre entre le dispositif de contrôle vocal DCV et le serveur SrvVoc pour préciser les choix de l'utilisateur ;
- Concomitamment, ou de manière subséquente, une empreinte vocale courante de l'utilisateur U1 est obtenue (500) à partir des mots prononcés par l'utilisateur U1 passant la commande d'achats de biens ou de services ;

  - L'empreinte vocale courante peut être obtenue d'au moins trois manières différentes, comme cela est exposé par la suite, en fonction des capacités et des caractéristiques du dispositif de contrôle vocal DCV (les pointillés représentent les modes de réalisation) ;

- L'empreinte vocale courante est comparée (600) avec une empreinte vocale de référence ;

  - Trois méthodes de comparaisons sont décrites par la suite, en lien avec les différents modes de réalisation (les pointillés représentent les modes de réalisation) ;

- Lorsque l'empreinte vocale courante correspond à l'empreinte vocale de référence, autorisation (700) de la mise en œuvre de la commande d'achats de biens ou de services ;

  - L'autorisation peut être implicite ou explicite, comme cela est décrit par la suite en lien avec différents modes de réalisation ; cette autorisation, cependant, met en œuvre soit le terminal de communication appairé au dispositif de contrôle vocal, le terminal de communication étant en possession des données de paiement mise en œuvre pour traiter la transaction, soit un dispositif électronique spécifique, situé au sein du réseau de communication, en charge d'effectuer le paiement. Les deux modes de réalisation sont décrits par la suite.

Ainsi, comme exposé précédemment, l'invention apporte une sécurité dans le traitement de transaction de paiement dont l'origine est un dispositif de contrôle vocal DCV. En effet, d'une part il n'est plus nécessaire de déposer des données de paiement au niveau de serveur, comme cela est le cas actuellement. Dans certains modes de réalisation, il n'est même pas nécessaire de déposer des données d'identification auprès de serveurs, comme c'est également le cas actuellement. En effet, les serveurs, dans le traitement d'une transaction de paiement, selon l'invention, reçoivent de l'information temporairement, de manière chiffrée, dont ils ne peuvent prendre connaissance. Seul le serveur transactionnel, qui au final exécute la transaction est en mesure de prendre connaissance de l'information confidentielle transmise. Ainsi, du point de vue du dispositif de contrôle vocal, qui est le dispositif autour duquel la commande de bien ou de service s'articule dans le cadre de l'invention, le procédé précédemment décrit, comprend les étapes consistant à :

- Obtenir, par l'intermédiaire du composant de captation, au moins une donnée représentative d'une commande vocale d'achat, ladite commande d'achat émanant de la voie d'un utilisateur et se rapportant à l'achat d'au moins un au moins un bien ou un service ;
- Authentifier, à partir de ladite au moins une donnée représentative de la commande d'achat, au moins une empreinte vocale représentative dudit utilisateur ; et
- Lorsque ladite au moins une empreinte vocale représentative dudit utilisateur correspond à un utilisateur autorisé à effectuer des achats à l'aide dudit dispositif électronique de contrôle vocal, transmettre, à un dispositif de traitement, auquel ledit dispositif électronique de contrôle vocal est connecté, une requête d'obtention d'une autorisation d'achat, ladite requête comprenant au moins une donnée représentative de la transaction de paiement.

Deux mises en œuvre principales sont envisagées : l'uneselon l'invention revendiquée comprenant une série d'échanges entre le dispositif de contrôle vocal et un terminal de communication de l'utilisateur dont l'empreinte vocale est authentifiée (le terminal de communication de l'utilisateur jouant alors le rôle du dispositif de traitement, soit complètement, soit en tant qu'intermédiaire) ; l'autre mise en œuvre non revendiquée consiste en une double authentification de l'utilisateur (double authentification vocale), réalisée par un serveur de services vocaux et l'obtention d'un consentement vocal de l'utilisateur.

Pour mettre concrètement en œuvre l'invention, dans un mode de réalisation, les modifications à apporter au dispositif de contrôle vocal DCV consistent à le munir d'un micro et d'un haut-parleur dont les gammes de fréquence d'émission et de réception comprennent les ultrasons. Dans la présente invention, la "communication par ultrasons" est un procédé de communication permettant de transmettre des informations via le son d'une bande d'ondes ultrasonores en tant que support. Par exemple, un son d'une bande de fréquences de 18 à 20 kilohertz (Khz) est transmis (via un haut-parleur) ou reçu (via un microphone) pour envoyer et recevoir des données, et notamment des données numériques, selon un protocole de transmission adapté.

En fonction des modes de réalisation, les empreintes vocales courantes et les empreintes vocales de référence sont traitées de manières différentes. Pour ce qui est de l'empreinte vocale de référence, celle-ci est enregistrée au sein des serveurs du fournisseur de services vocaux. Notamment, cette empreinte vocale de référence est associée à un utilisateur au sein d'une base données biométriques. La base de données biométrique comprend un ensemble d'enregistrements, chaque enregistrement correspondant à un utilisateur donné et une empreinte vocale de référence est associée à cet utilisateur. Un utilisateur peut disposer de plusieurs empreintes vocales de référence dans la base de données (et donc de plusieurs enregistrements), ces empreintes vocales de référence correspondant par exemple à plusieurs moments et/ou inscriptions différents d'un même utilisateur. La base de données biométrique est sécurisée. Cela signifie que des mécanismes de chiffrement sont appliqués sur les enregistrements de la base de données afin d'empêcher des accès et/ou des utilisations illégitimes des données qui s'y trouvent. Plus particulièrement, une empreinte vocale de référence d'un utilisateur est chiffrée en utilisant un système cryptographique à base de clés de chiffrement, dont une clé maîtresse (master key) est par exemple définie lors de l'enregistrement (« opt_in ») de l'utilisateur et de l'enregistrement de l'empreinte vocale de référence. Lorsque cette technique est utilisée, la comparaison de l'empreinte vocale de référence avec une empreinte vocale courante comprend l'obtention d'une clé de chiffrement courante qui est utilisée pour dériver, à partir de l'empreinte vocale courante, une version chiffrée de l'empreinte vocale courante. La comparaison de l'empreinte vocale courante avec l'empreinte vocale de référence comprend alors la comparaison du chiffré de l'empreinte vocale courante avec le chiffré de l'empreinte vocale de référence. Ce chiffré est obtenu par l'application d'une clé échangée entre les dispositifs faisant partie du système (serveur, dispositif de contrôle vocal, terminaux de communication). Préférentiellement, il s'agit d'une clé de session qui est dérivable de la master key, la dérivation de la clé de session étant réalisée au moment de l'établissement d'une liaison de transmission de données chiffrées entre deux des dispositifs partie au système.

Par ailleurs, l'empreinte cryptographique de référence d'un utilisateur (ou une version chiffrée de cette empreinte cryptographique de référence) peut être transmise à un ou plusieurs serveurs bancaires ou serveur transactionnels. Typiquement, l'empreinte cryptographique de référence est communiquée au serveur bancaire de l'utilisateur, par exemple lors d'une phase d'inscription de l'utilisateur à un service de paiement par la voix. Alternativement, un serveur bancaire peut disposer d'une empreinte cryptographique de référence qui lui est propre, cette empreinte étant générée indépendamment de l'empreinte cryptographique de référence du serveur de fournisseur de services vocaux.

L'empreinte cryptographique courante, quant à elle, est calculée de plusieurs manières différentes, comme cela est exposée par la suite.

**5.2. Description de modes de réalisation**

**5.2.1. Obtention et comparaisons de l'empreinte courante de l'utilisateur**

Dans un premier mode de réalisation, la comparaison de l'empreinte vocale courante et la comparaison avec l'empreinte vocale de référence est effectuée au sein du dispositif de contrôle vocal lui-même. Dans ce cas de figure, les moyens de traitement qui sont compris au sein du dispositif de contrôle vocal (processeurs, mémoire, interfaces réseaux (filaire, sans fil), interfaces de communication de proximité (bluetooth, NFC)), sont épaulés, si nécessaire, par des moyens d'authentification vocaux. De tels moyens peuvent se présenter sous la forme de processeurs dédiés ou de processeurs sécurisés, spécifiquement dédiés à la mise en œuvre de ces opérations d'authentification de l'utilisateur. La confirmation d'authentification de l'utilisateur passant la commande est donc obtenue par un module au sein même du dispositif de contrôle vocal, sans interaction avec d'autres dispositifs. Ce mode de réalisation présente l'avantage de ne pas mobiliser de ressources soit au niveau du réseau soit au niveau du terminal de communication. Il présente également l'avantage d'être rapide à mettre en œuvre.

Dans un deuxième mode de réalisation, la comparaison de l'empreinte vocale courante et de l'empreinte vocale de référence est effectuée au sein du terminal de communication appairé au dispositif de contrôle vocal. Plus particulièrement, dans ce mode de réalisation, le dispositif de contrôle vocal transmet un échantillon vocal numérisé au terminal de communication appairé. Cette transmission peut être mise en œuvre soit par des moyens conventionnels de transmission (bluetooth, nfc) soit par l'intermédiaire d'un signal sonore numérisé inaudible, tel que décrit dans le cadre de la transmission des données de transaction. Plus particulièrement, à l'aide d'un haut-parleur, le dispositif de contrôle vocal forme une séquence sonore dans la gamme des ultrasons. Cette séquence sonore est captée par le terminal de communication appairée et enregistrée. Au besoin, le traitement de ces données met en œuvre une application instantanée, téléchargée automatiquement depuis le terminal de communication à réception du signal sonore numérisé. Les données numériques qui sont enregistrées au sein de cette séquence sonore sont ensuite décodées et enregistrées au sein du terminal de communication. Les données numériques sont transmises en utilisant un protocole de communication adapté. Les données numériques sont insérées dans une trame qui est émise à destination du terminal de communication. Deux cas de figure sont envisageables : soit les données numériques représentent l'empreinte vocale courante de l'utilisateur, empreinte qui est donc calculée par le dispositif de contrôle vocal préalablement à sa transmission ; soit les données numériques représentent un échantillon numérisé de la voix de l'utilisateur. Dans ce deuxième cas de figure, le terminal de communication effectue la transformation de cet échantillon numérisé en une empreinte vocale courante. La mise en œuvre de l'un ou de l'autre des deux cas de figure peut être décidée, au coup par coup ou en fonction des contraintes opérationnelles (notamment des capacités de traitement du dispositif de contrôle vocal). Une fois en possession de l'empreinte vocale courante de l'utilisateur, le terminal de communication effectue une comparaison de cette empreinte vocale courante avec une empreinte vocale de référence. Lorsque cette comparaison est positive, le terminal de communication transmet une confirmation d'authentification au dispositif de contrôle vocal. Le terminal de communication, dans cet exemple, agit comme un terminal de certification de l'authenticité de la voix de l'utilisateur autorisé à passer des commandes et à mener des transactions de paiement correspondantes. Ce deuxième mode de réalisation présente l'avantage de ne pas nécessiter l'utilisation de ressources réseau (serveur distant) et donc préserve d'une divulgation fortuite de l'empreinte vocale, en cas de problème sur le serveur.

Dans un troisième mode de réalisation, l'obtention de l'empreinte vocale courante est mise en œuvre par un serveur du fournisseur de services vocaux. Plus particulièrement, au fur et à mesure de la réception des commandes vocales en provenance de l'utilisateur, par exemple lors des étapes (100, 200, 300) précédemment décrites, le serveur du fournisseur de services vocaux calcule une empreinte vocale courante de l'utilisateur.

Deux cas de figure sont alors envisagés : dans le premier cas de figure, le serveur du fournisseur de services vocaux dispose de l'empreinte vocale de référence et effectue lui-même la comparaison de l'empreinte vocale courante et de l'empreinte vocale de référence et délivre la confirmation d'authentification de l'utilisateur à l'aide d'une application (un service) spécifique mis en œuvre sur le serveur du fournisseur de services vocaux. Dans ce cas le serveur du fournisseur de services vocaux agit comme un tiers certificateur de l'empreinte vocale de référence. Dans le deuxième cas de figure, qui est privilégié, le serveur du fournisseur de services vocaux ne dispose pas de l'empreinte vocale de référence, qui est enregistrée soit sur le dispositif de contrôle vocal soit sur le terminal de communication. Le serveur construit donc une réponse à destination du dispositif de contrôle vocal, réponse comprenant un champ de donnée comprenant l'empreinte vocale courante sous la forme d'une signature.

Dans ce deuxième cas de figure, la comparaison est effectuée soit comme dans le premier mode de réalisation soit comme dans le deuxième mode de réalisation présenté précédemment. Le deuxième cas de figure présente l'avantage de tirer parti des capacités de traitement du serveur et donc d'un potentiel meilleur traitement des échantillons vocaux.

A l'issue de la mise en œuvre de l'un quelconque de ces modes de réalisation, le dispositif de contrôle vocal dispose d'une confirmation (ou d'une infirmation) de l'identité et d'une authentification forte de l'utilisateur qui effectue la commande de biens ou de services à l'aide du dispositif de contrôle vocal. En cas d'authentification de l'utilisateur, le processus de commande se poursuit pour mettre en œuvre une transaction de paiement. Ce processus est mis en œuvre par l'intermédiaire du terminal de communication de l'utilisateur authentifié, lequel agit comme un fournisseur des données nécessaires au paiement, et notamment des données de carte bancaire. La mise en œuvre de la commande d'achat est décrite par la suite.

### 5.2.2. Mise en œuvre de la commande d'achats de biens ou de services

Lorsque l'utilisateur est authentifié et que la commande est validée par celui-ci, le traitement de la transaction de paiement peut être mis en œuvre. Plus particulièrement, le traitement de la transaction de paiement comprend la fourniture, par le terminal de communication, d'au moins une donnée de paiement et/ou au moins une donnée d'identification (credential) nécessaires à la mise en œuvre de la transaction. L'utilisation du terminal de communication est effectuée de la manière suivante, en utilisant une technique de transmission et d'interaction ne nécessitant pas l'intervention de l'utilisateur sur le terminal de communication.

Au préalable, on suppose que le dispositif de contrôle vocal possède, au sein de sa mémoire, une donnée de confirmation de l'authentification de l'utilisateur et/ou que le terminal de communication possède cette donnée car il a lui-même effectué la comparaison des empreintes vocales. Dans le premier cas, le dispositif de contrôle vocal transmet cette confirmation au terminal de communication.

Quoi qu'il en soit, le dispositif de contrôle vocal reçoit, en provenance du serveur SrvVoc, une requête d'obtention de données de paiement et/ou d'identification. Cette requête est transmise en utilisant le réseau de communication et le protocole de transmission adapté (par exemple HTTP/2 et un mécanisme de push permettant au serveur de transmettre au client des données nécessaires). Le dispositif de contrôle vocal reçoit la requête du serveur et construit sa propre requête à destination du terminal de communication, en utilisant un protocole et un mode de transmission adapté. De manière préférentielle, le mode de transmission par l'intermédiaire d'ultrasons est utilisé. La requête d'obtention des données de paiement est transmise au terminal de communication. A réception de cette requête, le terminal de communication récupère la ou les données de paiement et/ou la ou les données d'identification requises. Le terminal de communication obtient ces données qui sont enregistrées au sien d'une mémoire du terminal de communication. De manière préférentielle, la mémoire en question est sécurisée et les données sont gérées par l'intermédiaire d'un environnement d'exécution sécurisé, par exemple utilisant son propre processeur sécurisé afin de garantir la sécurité de ces données. Le terminal de communication construit alors une réponse comprenant les données requises et transmet ces données au dispositif de contrôle vocal. Astucieusement, cet échange requête/réponse entre le terminal de communication et le dispositif de contrôle vocal est précédé d'un échange de matériels cryptographiques permettant de chiffrer les communications. Dans une variante, le dispositif de contrôle vocal fourni une clé publique au terminal de communication et de manière identique le terminal de communication fournit une clé publique au dispositif de contrôle vocal. Cet échange de matériels cryptographiques permet d'assurer que les données transmises (par exemple via les micros et haut-parleurs des dispositifs et transmission ultrasonore) ne seront pas compromises, même si un dispositif malveillant est à l'écoute des données numériques ultrasonores échangées. Cet échange de matériels cryptographique préalable peut avantageusement être également mis en œuvre lors de l'échange des données vocales, échange précédemment décrit dans le cadre de l'obtention et de la comparaison des empreintes vocales.

Lorsque le dispositif de contrôle vocal reçoit les données de paiement et/ou d'identification en provenance du terminal de communication, il déchiffre ces données à l'aide de sa clé privée (le cas échéant) et transmet ces données de manière sécurisée au serveur SrvVoc. En possession de ces données, le serveur SrvVoc les communique soit au serveur marchand, soit directement au serveur transactionnel, afin que la transaction de paiement puisse être menée. De cette manière, les données de paiement et/ou d'identification nécessaires au traitement de la transaction ne sont donc pas nécessairement à disposition du serveur SrvVoc et une réelle authentification est mise en œuvre pour le paiement.

Alternativement, les données de paiement sont disponibles au niveau du serveur, mais l'utilisation de ces données de paiement peut être conditionnée à la génération d'un mot de passe à usage unique (« one time password ») et ce mot de passe à usage unique est généré soit par le dispositif de contrôle vocal, sur la base de l'authentification de la voix du locuteur, soit par le terminal de communication, également sur la base de l'authentification de la voix du locuteur. Le serveur en charge peut également, de son côté, générer un mot de passe à usage unique de référence, sur la même base (empreinte vocale de référence de l'utilisateur) et pour effectuer le paiement, le mot de passe à usage unique courant est transmis ·au serveur en charge pour valider le paiement (c'est-à-dire pour valider l'utilisation des données de paiement pour effectuer la transaction).

Dans un mode de réalisation alternatif ou complémentaire, qui présente un avantage supérieur de confidentialité, le processus suivant est mis en œuvre. Le dispositif de contrôle vocal reçoit, en provenance du serveur SrvVoc, une requête d'obtention de données de paiement et/ou d'identification. Cette requête est transmise en utilisant le réseau de communication et le protocole de transmission adapté (par exemple HTTP/2 et un mécanisme de push permettant au serveur de transmettre au client des données nécessaires). Cette requête comprend d'une part une donnée représentative de la ou des données nécessaires et une adresse de localisation à laquelle les données doivent être fournies. Le dispositif de contrôle vocal forme lui-même une requête au terminal de communication. A réception de cette requête le terminal de communication, comme_- précédemment, obtient les données requises. Cependant, plutôt que de transmettre ces données au dispositif de contrôle vocal, il se connecte de manière sécurisée à l'adresse de localisation requise et transmet ces données directement à cette adresse. Avantageusement, cette adresse peut être une adresse du serveur marchand et/ou une adresse du serveur transactionnel en charge de la gestion de la transaction. De cette manière, ni le dispositif de contrôle vocal, ni le serveur SrvVoc n'entrent en possession de ces données. Ainsi, la confidentialité de celles-ci est préservée de ce point de vue. Dans cette alternative, également, en lieu et place des données de paiement ou d'authentification, un mot de passe à usage unique peut être transmis, lequel est généré sur la base de l'empreinte vocale, et un mot de passe à usage unique de référence, généré sur la base de l'empreinte vocale de référence, est également calculé par le serveur en charge pour comparaison. Lorsque les deux mots de passe à usage unique concordent, l'utilisation des données de paiement (qui sont soit sur un dispositif TCOM ou DCV, soit sur un des serveurs) est autorisée.

Par ailleurs, techniquement, dans les deux modes de réalisation précédemment décrits, la mise en œuvre de la transmission des données par le terminal de communication peut comprendre l'exécution d'une application spécifique, appelée application instantanée. Cette application instantanée est éventuellement téléchargée (si pas déjà présente au sein du terminal de communication). Cette application instantanée peut avantageusement être présente à l'adresse de localisation fournie par le serveur SrvVoc. Lorsqu'il se rend à l'adresse indiquée, le terminal de communication télécharge et/ou exécute l'application instantanée pointée par ce lien. L'application instantanée met alors en œuvre les étapes précédemment décrites. De manière complémentaire, et ce afin de sécuriser des utilisateurs frileux à l'idée de pouvoir commander sans interaction digitale avec le terminal de communication, une confirmation peut être requise par l'utilisateur sur le terminal de communication, soit en saisissant un code, comme cela est actuellement le cas, soit juste en acceptant la transaction (click sur un bouton accepter la transaction de paiement). Lorsque l'application utilisée n'est pas une application instantanée, celle-ci peut par exemple prendre la forme d'une application bancaire classique en possession du client.

L'avantage de la mise en œuvre d'une application instantanée réside dans le fait que celle-ci peut être conçue pour et/ou par le Marchand, pour s'adapter au système d'information de celui-ci et donc pour faciliter le traitement des commandes passées vocalement en utilisant la technique de l'invention. Cela présente de nombreux avantages : cela permet d'assurer que le marchand n'est pas tributaire de l'écosystème mis en œuvre par le fournisseur de services vocaux et cela permet d'assurer que l'utilisateur a le choix d'acheter par l'intermédiaire d'autres services marchands que ceux proposés par le fournisseur de services vocaux.

Un autre avantage de l'application instantanée est qu'elle ne réside pas dans la mémoire permanente du terminal de communication : elle est chargée au besoin, pour recevoir l'empreinte et/ou la commande d'achat. A la fin de sa tâche elle disparait purement et simplement du terminal de communication et ne laisse aucune trace sur celui-ci.

Par ailleurs, cela permet d'assurer également que le terminal de communication dispose toujours de la version de l'application instantanée la plus récente, et donc permet d'assurer que les protocoles d'échange de données et les protocoles cryptographiques puissent être adaptés, en permanence aux exigences de conformité et de sécurité adaptées au paiement, notamment par l'intermédiaire d'une interface vocale.

Concernant le paiement en lui-même, celui-ci est mis en œuvre par le serveur marchand et un serveur transactionnel. De façon astucieuse, la transmission des données de paiement comprend, dans au moins un mode de réalisation, l'utilisation de l'empreinte vocale courante. Ainsi, par exemple, l'empreinte vocale courante est utilisée pour contextualiser la transaction de paiement. Cette contextualisation peut prendre deux formes, en fonction des modes de réalisation :

- Une version chiffrée de l'empreinte vocale courante est utilisée en lieu et place d'un champ de vérification des données de paiement ; plus particulièrement, une version chiffrée de l'empreinte vocale courante est utilisé à la place du code de vérification (CVV) de la carte bancaire de l'utilisateur. L'avantage de cette solution est de conditionner le paiement à la vérification de l'empreinte vocale de référence en ne modifiant pas l'architecture globale de paiement ; le serveur transactionnel (ou le serveur bancaire), réceptionne les données de paiement (numéro de carte, date d'expiration, nom du porteur et chiffré de l'empreinte vocale courante) en provenance du serveur marchand et compare ces données reçues aux données en sa possession : notamment une comparaison du chiffré de l'empreinte courante est effectuée par rapport au chiffré de l'empreinte vocale de référence. Lorsque les données sont valides, le serveur transactionnel met en œuvre le paiement.

- Une version chiffrée de l'empreinte vocale courante est utilisée pour générer un jeton transactionnel sur la base des données de paiement en possession du serveur marchand ; plus particulièrement, une version chiffrée de l'empreinte vocale courante est utilisée pour générer, à l'aide d'une fonction de chiffrement ou de hachage, un jeton de paiement qui est transmis au serveur transactionnel. A réception de celui-ci, le serveur transactionnel calcul le même jeton, à l'aide des informations en sa possession et compare les jetons. S'ils sont identiques, la transaction de paiement peut être exécutée. Le calcul du jeton peut mettre en œuvre la technique suivante :

$$Jeton = Hash(EvC, DP)$$

Dans laquelle :

- *Jeton* est le jeton de paiement ;
- *Hash* est une fonction de hachage ;
- *EvC* est une version chiffrée de l'empreinte vocale courante ;
- *DP* est une fonction de regroupement (par exemple concaténation, soustraction binaire ou hexadécimale, rotation, etc.) des données de paiement.

Des telles mises en œuvre permettent de lier directement la mise en œuvre du paiement au contrôle et à l'authentification vocale de l'utilisateur, et donc d'augmenter la sécurité des transactions d'une part, en authentifiant l'utilisateur et d'augmenter la sécurité du paiement d'autre part en assurant un bouclage de l'authentification de l'utilisateur avec les données de paiement utilisées.

### 5.3. Dispositif électronique de traitement mis en œuvre au sein d'un réseau de communication

Dans le cadre d'une mise en œuvre au sein d'un réseau de communication, l'utilisation d'un terminal de communication appairé au dispositif de contrôle vocal n'est pas nécessaire. Il est cependant nécessaire d'assurer une certaine sécurité du paiement. Notamment, il est nécessaire de mettre en œuvre une obtention d'un consentement d'achat, ce consentement d'achat étant authentifié. Dans le mode de réalisation précédemment décrit, le consentement d'achat est obtenu par l'intermédiaire du terminal de communication, avec éventuellement l'utilisation d'un code spécifique, en possession de l'utilisateur autorisé à effectuer le paiement. Dans ce mode de réalisation non revendiqué, plutôt que d'interagir avec le terminal de communication de l'utilisateur, on s'assure d'obtenir vocalement le consentement de l'utilisateur en :

- réalisant au moins une deuxième authentification vocale : c'est-à-dire en comparent au moins une deuxième empreinte vocale courante avec l'empreinte vocale de référence ; et
- en demandant explicitement son consentement à l'utilisateur ;

L'authentification vocale, précédemment décrite, est ici mise en œuvre au moins deux fois : au début ou concomitamment à la passation de commande effectuée par l'utilisateur : une ou plusieurs empreintes vocales courantes sont calculées, à des moments différents de la passation de commande : cela permet de s'assurer que d'une part l'utilisateur autorisé est bien celui qui effectue la commande, et d'autre part que ce n'est pas quelqu'un d'autre qui prend sa place après que la première authentification vocale a eu lieu.

L'obtention du consentement de l'utilisateur se déroule de la façon suivante : le serveur marchand transmet, au serveur de services vocaux, une requête d'obtention de consentement ; le serveur de service vocaux transmet cette requête au dispositif de contrôle vocal qui la restitue sous une forme vocale à l'utilisateur, par exemple sous la forme : « *acceptez-vous de payer X €/S pour l'achat de : [...]* » en détaillant le panier d'achat de l'utilisateur ; ce dernier prononce alors une phrase d'acceptation du type « *oui j'accepte ce paiement/cette commande* ». Cette obtention de consentement comprend également le calcul d'une empreinte vocale dite « de consentement » qui est comparée à l'empreinte vocale de référence. Lorsque le consentement est obtenu vocalement et que l'empreinte vocale courante « de consentement » correspond à l'empreinte vocale de référence, la transaction est validée.

Cette validation de la transaction comprend :

- d'une part, la transmission par le serveur de services vocaux, d'une confirmation d'authentification de l'empreinte vocale courante, au serveur marchand ; et
- d'autre part la transmission de la réponse de l'utilisateur, transformée sous forme textuelle, au serveur marchand.

A réception de ces données, le serveur marchand met en œuvre une transaction de paiement basée sur l'obtention des données de paiement de l'utilisateur, données qui sont déjà à disposition du serveur marchand (par exemple car l'utilisateur a fourni ces données précédemment lors d'une inscription sur le site web du serveur marchand).

### 5.4. Mode de réalisation complémentaire

Dans un mode de réalisation complémentaire, les procédés précédemment décrits ne sont pas mis en œuvre uniquement en utilisant le dispositif de contrôle vocal en tant que dispositif passerelle. Plus particulièrement, lors de la commande sur le dispositif de contrôle vocal DCV, le DCV peut envoyer une commande au terminal de communication pour qu'il utilise son propre dispositif de captation (le micro) et de transmettre ce qu'il entend vers l'application instantanée du terminal de communication (on passe alors par le mode par défaut d'écoute du système d'exploitation du terminal de communication, qui démarre alors l'application instantanée) et les étapes précédemment décrites sont mises en œuvre non pas par le dispositif de contrôle vocal mais par le terminal de communication qui jour alors de rôle de dispositif de contrôle vocal. L'avantage de ce mode de réalisation est qu'il assure que les informations sensibles (empreinte vocale, données d'authentification, données de paiement) sont utilisées et transmises uniquement entre le terminal de communication de l'utilisateur, disposant d'un TEE et/ou d'un élément de sécurisation (secure element) et le ou les serveurs en charge, sans passer par le dispositif de contrôle vocal.

### 5.5. Autres caractéristiques et avantages

On présente, en relation avec la **figure 4,** une architecture simplifiée d'un dispositif électronique de contrôle vocal apte à effectuer le traitement d'une commande d'achat de biens ou de services passée vocalement par un utilisateur. Un dispositif électronique de contrôle vocal comprend une mémoire 41, une unité de traitement 42 équipée par exemple d'un microprocesseur, et pilotée par un programme d'ordinateur 43, mettant en œuvre le procédé tel que précédemment décrit. Dans au moins un mode de réalisation, l'invention est mise en œuvre sous la forme d'une application installée sur ce dispositif. Un tel dispositif comprend, en fonction des modes de réalisation :

- des moyens d'obtention, par l'intermédiaire du composant de captation, de type microphone, d'au moins une donnée représentative d'une commande vocale d'achat, ladite commande d'achat émanant de la voie d'un utilisateur ;
- des moyens d'identification, à partir de ladite au moins une donnée représentative de la commande d'achat, d'au moins un bien ou un service correspondant à ladite commande d'achat ; ces moyens peuvent être mis en œuvre conjointement avec un serveur auquel le dispositif de contrôle vocal est connecté ;
- des moyens d'authentification, à partir de ladite au moins une donnée représentative de la commande d'achat, d'au moins une empreinte vocale représentative dudit utilisateur ; et
- Lorsque ladite au moins une empreinte vocale représentative dudit utilisateur correspond à un utilisateur autorisé à effectuer des achats à l'aide dudit dispositif électronique, des moyens de transmission, à un autre dispositif auquel ledit dispositif électronique est connecté, d'une requête d'obtention d'une autorisation d'achat, ladite requête comprenant au moins une donnée représentative de la transaction de paiement.

Comme explicité précédemment, ces moyens sont mis en œuvre par l'intermédiaire de modules et/ou de composants, par exemple sécurisés. Ils permettent ainsi de maintenir confidentielles les données nécessaires au paiement et de n'autoriser un acte d'achat par commande vocale que lorsque l'utilisateur qui passe la commande est authentifié (et donc autorisé à le faire).

## Revendications

1. Procédé de traitement d'une commande d'achat de biens ou de services, procédé mis en œuvre au sein d'un dispositif électronique de contrôle vocal (DCV) comprenant au moins un composant de captation de commandes vocales, dit composant de captation, et un composant d'émission sonore, dit composant d'émission, procédé consistant à :

   - Obtenir, par l'intermédiaire du composant de captation, au moins une donnée représentative d'une commande vocale d'achat, ladite commande d'achat émanant de la voix d'un utilisateur et se rapportant à l'achat d'au moins un bien ou un service ;
   - Authentifier, à partir de ladite au moins une donnée représentative de la commande d'achat, au moins une empreinte vocale représentative dudit utilisateur ; et

   - Lorsque ladite au moins une empreinte vocale représentative dudit utilisateur correspond à un utilisateur autorisé à effectuer des achats à l'aide dudit dispositif électronique de contrôle vocal (DCV), transmettre, à un dispositif électronique de traitement auquel ledit dispositif électronique de contrôle vocal (DCV) est connecté, une requête d'obtention d'une autorisation d'achat, ladite requête comprenant au moins une donnée représentative de la transaction de paiement ;

   **caractérisé en ce que** le dispositif électronique de traitement est un terminal de communication (TCOM) auquel ledit dispositif électronique de contrôle vocal (DCV) a été préalablement appairé, et **en ce que** transmettre la requête d'obtention d'une autorisation d'achat au terminal de communication (TCOM) auquel ledit dispositif électronique est appairé comprend :

   - Construire la requête d'obtention de l'autorisation d'achat ;
   - Activer le composant d'émission du dispositif électronique ;
   - Générer un son en fonction de la requête d'obtention de l'autorisation d'achat ;
   - Emettre ledit son à l'aide du composant d'émission.

2. Procédé de traitement d'une commande d'achat de biens ou de services, selon la revendication 1, **caractérisé en ce que** ledit son émis par ledit dispositif électronique de contrôle vocal (DCV) se situe dans la gamme des ultrasons.

3. Procédé de traitement d'une commande d'achat de biens ou de services, selon la revendication 1, **caractérisé en ce qu'**il comprend en outre, postérieurement à la transmission de la requête d'obtention d'une autorisation d'achat, la réception d'une réponse d'acceptation de la transaction de paiement.

4. Procédé de traitement d'une commande d'achat de biens ou de services, selon la revendication 3, **caractérisé en ce qu'**il comprend en outre, postérieurement à la réception d'une réponse d'acceptation de la transaction de paiement, une étape de transmission d'une structure de données représentative de la transaction de paiement à un serveur transactionnel (SrvT).

5. Procédé de traitement d'une commande d'achat de biens ou de services, selon la revendication 4, **caractérisé en ce que** la structure de données représentative de la transaction de paiement comprend au moins une donnée représentative d'une empreinte vocale courante .

**6.** Procédé de traitement d'une commande d'achat de biens ou de services, selon la revendication 5, **caractérisée en ce que** ladite au moins une donnée représentative d'une empreinte vocale courante est utilisée pour remplacer au moins une donnée de paiement d'une carte de paiement dudit utilisateur.

**7.** Procédé de traitement d'une commande d'achat de biens ou de services, selon la revendication 5, **caractérisée en ce que** ladite au moins une donnée représentative d'une empreinte vocale courante est utilisée pour construire un jeton de paiement à l'aide d'au moins une donnée de paiement d'une carte de paiement dudit utilisateur.

**8.** Dispositif électronique de contrôle vocal (DCV), dispositif apte à effectuer un traitement d'une commande d'achat de bien ou de service, comprenant au moins un composant de captation de commandes vocales, dit composant de captation, et un composant d'émission sonore, dit composant d'émission, dispositif comprenant des moyens :

  - D'obtention, par l'intermédiaire du composant de captation, d'au moins une donnée représentative d'une commande vocale d'achat, ladite commande d'achat émanant de la voix d'un utilisateur et se rapportant à l'achat d'au moins un bien ou un service ;
  - D'authentification, à partir de ladite au moins une donnée représentative de la commande d'achat, d'au moins une empreinte vocale représentative dudit utilisateur ; et
  - De transmission, à un dispositif électronique de traitement auquel ledit dispositif électronique de contrôle vocal (DCV) est connecté, d'une requête d'obtention d'une autorisation d'achat, ladite requête comprenant au moins une donnée représentative de la transaction de paiement, ces moyens de transmission étant mis en œuvre lorsque ladite au moins une empreinte vocale représentative dudit utilisateur correspond à un utilisateur autorisé à effectuer des achats à l'aide dudit dispositif électronique de contrôle vocal (DCV) ;

  **caractérisé en ce que** le dispositif électronique de traitement est un terminal de communication (TCOM) auquel ledit dispositif de contrôle vocal (DCV) a été préalablement appairé, et **en ce que** la transmission de la requête d'obtention d'une autorisation d'achat au terminal de communication (TCOM) auquel ledit dispositif électronique de contrôle vocal (DCV) est appairé comprend :

  - Construire la requête d'obtention de l'autorisation d'achat ;
  - Activer le composant d'émission du dispositif électronique ;
  - Générer un son en fonction de la requête d'obtention de l'autorisation d'achat ;
  - Emettre ledit son à l'aide du composant d'émission.

**9.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

**Patentansprüche**

**1.** Verfahren zur Verarbeitung einer Bestellung von Waren oder Dienstleistungen, wobei das Verfahren in einem elektronischen Sprachsteuerungsgerät (DCV) implementiert ist, das mindestens eine Komponente zum Erfassen von Sprachbefehlen, die als Erfassungskomponente bezeichnet wird, und eine Schallausgabekomponente, die als Ausgabekomponente bezeichnet wird, umfasst, bestehend aus:

  - Erfassen mindestens eines Datenelements, das eine sprachbasierte Bestellung repräsentiert, unter Verwendung der Erfassungskomponente, wobei die Bestellung von der Stimme eines Benutzers stammt und sich auf den Kauf mindestens einer Ware oder einer Dienstleistung bezieht;
  - Authentifizierung mindestens eines für den Benutzer repräsentativen Stimmabdrucks auf der Grundlage des mindestens einen für die Bestellung repräsentativen Datenelements; und
  - wenn der mindestens eine für den Benutzer repräsentative Stimmabdruck einem Benutzer entspricht, der zum Tätigen von Käufen unter Verwendung der elektronischen Sprachsteuerungsvorrichtung (DCV) berechtigt ist, Übertragen einer Anfrage zum Erhalten einer Kaufautorisierung an eine elektronische Verarbeitungsvorrichtung, mit der die elektronische Sprachsteuerungsvorrichtung (DCV) verbunden ist, wobei die Anfrage mindestens ein für die Zahlungstransaktion repräsentatives Datenelement umfasst.

  **dadurch gekennzeichnet, dass** das elektronische Verarbeitungsgerät ein Kommunikationsendgerät (TCOM) ist, mit dem das elektronische Sprachsteuerungsgerät (DCV) zuvor gekoppelt wurde, und dass das Senden der Anfrage zum Erhalt einer Kaufautorisierung an das Kommunikationsendgerät (TCOM), mit dem das elektronische Gerät gekoppelt ist, um-

fast:

- Erstellen der Anfrage zum Erhalt der Kaufautorisierung;
- Aktivieren der Sendekomponente des elektronischen Geräts;
- Erzeugen eines Tons entsprechend der Anfrage zum Erhalt der Kaufautorisierung;
- Ausgeben des Tons unter Verwendung der Emissionskomponente.

2. Verfahren zur Verarbeitung einer Bestellung von Waren oder Dienstleistungen gemäß Anspruch 1, **dadurch gekennzeichnet, dass** der von der elektronischen Sprachsteuerungsvorrichtung (DCV) ausgegebene Ton im Ultraschallbereich liegt.

3. Verfahren zur Bearbeitung einer Bestellung von Waren oder Dienstleistungen gemäß Anspruch 1, **dadurch gekennzeichnet, dass** es nach dem Senden der Anfrage zum Erhalt einer Kaufautorisierung zusätzlich das Empfangen einer Antwort zur Annahme der Zahlungstransaktion umfasst.

4. Verfahren zur Bearbeitung einer Bestellung von Waren oder Dienstleistungen gemäß Anspruch 3, **dadurch gekennzeichnet, dass** es nach dem Empfang einer Antwort zur Annahme der Zahlungstransaktion einen Schritt zum Senden einer Datenstruktur, die die Zahlungstransaktion repräsentiert, an einen Transaktionsserver (SrvT) umfasst.

5. Verfahren zur Bearbeitung einer Bestellung von Waren oder Dienstleistungen gemäß Anspruch 4, **dadurch gekennzeichnet, dass** die für die Zahlungstransaktion repräsentative Datenstruktur mindestens ein für einen aktuellen Stimmabdruck repräsentatives Datenelement umfasst.

6. Verfahren zur Verarbeitung einer Bestellung von Waren oder Dienstleistungen gemäß Anspruch 5, **dadurch gekennzeichnet, dass** das mindestens eine Datenelement, das einen aktuellen Stimmabdruck repräsentiert, verwendet wird, um mindestens ein Zahlungsdatenelement einer Zahlungskarte des Benutzers zu ersetzen.

7. Verfahren zur Bearbeitung einer Bestellung von Waren oder Dienstleistungen gemäß Anspruch 5, **dadurch gekennzeichnet, dass** das mindestens eine Datenelement, das einen aktuellen Stimmabdruck repräsentiert, verwendet wird, um unter Verwendung mindestens eines Zahlungsdatenelements einer Zahlungskarte des Benutzers ein Zahlungstoken zu erstellen.

8. Elektronisches Sprachsteuerungsgerät (DCV), das in der Lage ist, eine Bestellung von Waren oder Dienstleistungen zu verarbeiten, mit mindestens einer Komponente zum Erfassen von Sprachbefehlen, der sogenannten Erfassungskomponente, und einer Tonausgabekomponente, der sogenannten Ausgabekomponente, wobei das Gerät Mittel umfasst:

- zum Erhalten, unter Verwendung der Erfassungskomponente, mindestens eines Datenelements, das für eine sprachbasierte Bestellung repräsentativ ist, wobei die Bestellung von der Stimme eines Benutzers ausgeht und sich auf den Kauf mindestens einer Ware oder einer Dienstleistung bezieht;
- zum Authentifizieren mindestens eines für den Benutzer repräsentativen Stimmabdrucks auf der Grundlage des mindestens einen für die Bestellung repräsentativen Datenelements; und
- zum Übertragen einer Anfrage zum Erhalt einer Kaufautorisierung an ein elektronisches Verarbeitungsgerät, mit dem das elektronische Sprachsteuerungsgerät (DCV) verbunden ist, wobei die Anfrage mindestens ein Datenelement umfasst, das für die Zahlungstransaktion repräsentativ ist, wobei diese Übertragungsmittel implementiert werden, wenn der mindestens eine für den Benutzer repräsentative Stimmabdruck einem Benutzer entspricht, der zum Tätigen von Käufen unter Verwendung des elektronischen Sprachsteuerungsgeräts (DCV) autorisiert ist.

**dadurch gekennzeichnet, dass** das elektronische Verarbeitungsgerät ein Kommunikationsendgerät (TCOM) ist, mit dem das elektronische Sprachsteuerungsgerät (DCV) zuvor gekoppelt wurde, und dass das Senden der Anfrage zum Erhalt einer Kaufautorisierung an das Kommunikationsendgerät (TCOM), mit dem das elektronische Gerät gekoppelt ist, Folgendes umfasst:

- Erstellen der Anfrage zum Erhalt der Kaufautorisierung;
- Aktivieren der Emissionskomponente des elektronischen Geräts;
- Erzeugen eines Tons entsprechend der Anfrage zum Erhalt der Kaufautorisierung;
- Ausgeben des Tons unter Verwendung der Emissionskomponente.

9. Computerprogrammprodukt, das aus einem Kommunikationsnetzwerk heruntergeladen und/oder auf einem computerlesbaren Medium gespeichert und/oder auf einem Mikroprozessor ausgeführt werden kann, **dadurch gekennzeichnet, dass** es Programmcodeanweisungen zum Ausführen eines Verfahrens gemäß Anspruch 1 umfasst, wenn es auf einem Computer ausgeführt wird.

**Claims**

1. Method for processing a purchase order of goods or services, said method being implemented within an electronic voice control device (DCV) comprising at least one component for capturing voice orders, called capturing component, and a sound emission component, called emission component, consisting in:

   - Obtaining, using the capturing component, at least one data item representative of a voice-based purchase order, said purchase order emanating from the voice of a user and relating to the purchase of at least one at least one good or one service;
   - Authenticating at least one voiceprint representative of said user based on said at least one data item representative of the purchase order; and
   - When said at least one voiceprint representative of said user corresponds to a user authorised to make purchases using said electronic voice control device (DCV), transmitting, to an electronic processing device to which said electronic voice control device (DCV) is connected, a request to obtain a purchase authorisation, said request comprising at least one data item representative of the payment transaction.

   **characterised in that** the electronic processing device is a communication terminal (TCOM) with which said electronic voice control device (DCV) has been previously paired, and **in that** transmitting the request to obtain a purchase authorisation to the communication terminal (TCOM) with which said electronic device is paired comprises:

   - Building the request to obtain the purchase authorisation;
   - Activating the emission component of the electronic device;
   - Generating a sound according to the request to obtain the purchase authorisation;
   - Emitting said sound using the emission component.

2. Method for processing a purchase order of goods or services, according to claim 1, **characterised in that** said sound emitted by said electronic voice control device (DCV) is situated in the ultrasound range.

3. Method for processing a purchase order of goods or services, according to claim 1, **characterised in that** it further comprises, after transmitting the request to obtain a purchase authorisation, receiving a payment transaction acceptance response.

4. Method for processing a purchase order of goods or services, according to claim 3, **characterised in that** it further comprises, after receiving a payment transaction acceptance response, a step of transmitting a data structure representative of the payment transaction to a transaction server (SrvT).

5. Method for processing a purchase order of goods or services, according to claim 4, **characterised in that** the data structure representative of the payment transaction comprises at least one data item representative of a current voiceprint.

6. Method for processing a purchase order of goods or services, according to claim 5, **characterised in that** said at least one data item representative of a current voiceprint is used to replace at least one payment data item of a payment card of said user.

7. Method for processing a purchase order of goods or services, according to claim 5, **characterised in that** said at least one data item representative of a current voiceprint is used to build a payment token using at least one payment data item of a payment card of said user.

8. Electronic voice control device (DCV), device being capable of processing a purchase order of goods or services, comprising at least one component for capturing voice orders, called capturing component, and a sound emission component, called emission component, said device comprising means:

   - For obtaining, using the capturing component, at least one data item representative of a voice-based purchase order, said purchase order emanating from the voice of a user and relating to the purchase of at least one at least one good or one service;
   - for authenticating at least one voiceprint representative of said user based on said at least one data item representative of the purchase order; and
   - for transmitting, to an electronic processing device to which said electronic voice control device (DCV) is connected, a request to obtain a purchase authorisation, said request comprising at least one data item representative of the payment transaction, these transmission means being implemented when said at least one voiceprint representative of said user corresponds to a user authorised to make purchases using said electronic voice control device (DCV).

**characterised in that** the electronic processing device is a communication terminal (TCOM) with which said electronic voice control device (DCV) has been previously paired, and **in that** transmitting the request to obtain a purchase authorisation to the communication terminal (TCOM) with which said electronic device is paired comprises:

- Building the request to obtain the purchase authorisation;
- Activating the emission component of the electronic device;
- Generating a sound according to the request to obtain the purchase authorisation;
- Emitting said sound using the emission component.

9. Computer program product downloadable from a communication network and/or stored on a computer-readable medium and/or executable on a microprocessor, **characterised in that** it comprises program code instructions for executing a method according to claim 1, when it is executed on a computer.

Figure 1

Figure 4

Figure 2

Figure 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018068317 A

- US 10063542 B